(19) Europäisches Patentamt
European Patent Office
Office européen des brevets

(11) **EP 3 152 528 B1**

(12) **FASCICULE DE BREVET EUROPEEN**

(45) Date de publication et mention de la délivrance du brevet:
**15.01.2020 Bulletin 2020/03**

(21) Numéro de dépôt: **15729550.2**

(22) Date de dépôt: **02.06.2015**

(51) Int Cl.:
*G01F 23/00* [(2006.01)]    *G01F 9/00* [(2006.01)]

(86) Numéro de dépôt international:
**PCT/FR2015/051444**

(87) Numéro de publication internationale:
**WO 2015/185842 (10.12.2015 Gazette 2015/49)**

(54) **PROCÉDÉ ET SYSTÈME D'ÉVALUATION D'UN DÉBIT D'UN FLUIDE**

VERFAHREN UND SYSTEM ZUR BEWERTUNG EINER STRÖMUNG

METHOD AND SYSTEM FOR EVALUATION OF A FLUID FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2014 FR 1455024**

(43) Date de publication de la demande:
**12.04.2017 Bulletin 2017/15**

(73) Titulaires:
• **SAFRAN AIRCRAFT ENGINES**
  **75015 Paris (FR)**
• **Centre National d'Etudes Spatiales (CNES)**
  **75001 Paris (FR)**

(72) Inventeurs:
• **LE GONIDEC, Serge**
  **27200 Vernon (FR)**
• **ROMET, Antoine**
  **27460 Igoville (FR)**
• **MADANI, Tarek**
  **77176 NANDY (FR)**

(74) Mandataire: **Cabinet Beau de Loménie**
**158, rue de l'Université**
**75340 Paris Cedex 07 (FR)**

(56) Documents cités:
**EP-A2- 1 510 795        WO-A2-2012/156615**
**FR-A1- 2 965 305        FR-A1- 2 996 302**
**US-A1- 2012 150 517**

EP 3 152 528 B1

**Description**

DOMAINE DE L'INVENTION

Le présent exposé concerne un procédé d'évaluation d'un débit de fluide provenant d'un réservoir, et plus particulièrement la fiabilisation d'un tel procédé. Il concerne également un système permettant la mise en œuvre de ce procédé.

ARRIÈRE-PLAN TECHNOLOGIQUE

Un procédé d'évaluation d'un débit d'un fluide provenant d'un réservoir est divulgué par exemple dans la publication FR 2,965,305 A1 ou dans la publication FR 2,996,302 A1.

Par ailleurs, on connaît un procédé d'évaluation d'un débit d'un fluide provenant d'un réservoir, comprenant la mesure d'un niveau du fluide dans le réservoir. Pour des cas simples, par exemple dans l'hypothèse où la mesure de niveau est disponible en permanence, où le réservoir a une forme cylindrique et où il n'y a pas d'accumulation de fluide entre la sortie du réservoir et le point d'évaluation du débit, le débit de fluide peut être évalué avec certitude par une simple fonction affine.

Cependant, en pratique, la mesure du niveau de fluide est rarement disponible en permanence, ce qui nécessite l'utilisation d'interpolations ou d'estimateurs pendant les périodes où la mesure de niveau est indisponible. Or, il peut exister des incertitudes et des biais liés à la mesure de niveau et/ou aux estimateurs utilisés. De plus, le réservoir peut avoir une forme non cylindrique, ce qui introduit une non-linéarité dans la fonction d'évaluation. Il existe donc un besoin pour un nouveau type de procédé d'évaluation d'un débit.

PRÉSENTATION DE L'INVENTION

Le présent exposé concerne un procédé d'évaluation d'un débit d'un fluide provenant d'un réservoir, comprenant la mesure d'un niveau du fluide dans le réservoir et caractérisé en ce qu'il comprend une étape d'estimation du débit du fluide à l'aide d'un filtre de Kalman inodore, ladite étape d'estimation comprenant une étape d'obtention du débit brut de fluide ainsi que, lorsqu'une mesure de niveau est disponible, une étape de correction au cours de laquelle le débit brut obtenu est corrigé en fonction de la mesure de niveau.

Un filtre de Kalman est une méthode de calcul susceptible d'être mise en œuvre par ordinateur et permettant d'estimer les états d'un système dynamique à partir d'une série de données d'entrée incomplètes ou bruitées. Le filtre de Kalman est modélisé par une équation d'état (1), qui traduit l'évolution du système dynamique, et une équation de mesure (2), qui traduit la relation entre les grandeurs observables mesurées et l'état intrinsèque du système. Ces équations sont du type :

$$\begin{cases} x_{k+1} = f(x_k, u_k, w_k) & (1) \\ y_k = h(x_k, v_k) & (2) \end{cases}$$

où k est l'instant courant, k+1 l'instant suivant, x l'état (intrinsèque) du système, u les données d'entrée, y la grandeur mesurée (observée), f la fonction d'état, h la fonction de mesure et v et w sont des bruits (respectivement bruit de mesure et bruit d'état). Les variables x, y, u, v, w, peuvent être des vecteurs à une ou plusieurs composantes. Pour mettre en œuvre un filtre de Kalman dans un procédé selon l'invention, l'état x comprend le débit de fluide, que l'on observe à partir de la mesure y qui comprend par exemple le niveau de fluide dans le réservoir. Les données d'entrée u comprennent par exemple des paramètres du système tels que la vitesse d'une pompe et/ou la pression du fluide à une ou plusieurs positions du circuit de fluide. Les données d'entrée u peuvent être estimées à partir d'autres mesures que y ou être des données de fonctionnement du système.

Le filtre de Kalman comprend une étape d'obtention d'une valeur de l'état (k+1) suivant l'état courant (k) à partir des données d'entrée $u_k$ et une étape de correction de la valeur obtenue à partir de la mesure $y_k$. Ces étapes sont largement détaillées dans la littérature et ne seront pas réexpliquées ici dans le cas général.

Le filtre de Kalman inodore (ou filtre de Kalman non-parfumé, de l'anglais « unscented Kalman filter », ci-après UKF), décrit dans « A new extension of the Kalman filter to nonlinear systems » (Julier and Uhlmann, in the 11th international symposium on Aerospace/Defence sensing, simulation and controls, Vol. multi sensor fusion, tracking and resource management II, Orlando, Florida, 1997), est une variante du filtre de Kalman particulièrement adaptée aux systèmes non-linéaires tel que peut l'être le débit d'un fluide en fonction du niveau du réservoir d'où provient le fluide. En plus des étapes du filtre de Kalman, le filtre de Kalman inodore comprend une étape appelée « transformation inodore » consistant à approximer l'état courant $x_k$ par une variable aléatoire gaussienne représentée par un ensemble de points astucieusement choisis nommés sigma-points. Cet ensemble de points reproduit fidèlement la moyenne et la covariance de la variable aléatoire gaussienne. Lors de l'étape d'obtention, l'équation d'état (1) est appliquée à chacun des sigma-points afin d'obtenir l'état suivant. Il en résulte un ensemble de sigma-points à l'instant k+1, qui reproduit la moyenne et la covariance de l'état suivant $x_{k+1}$ avec une précision atteignant le second ordre (en termes de décomposition en série de Taylor). Par contraste, le filtre de Kalman étendu, qui est une autre variante du filtre de Kalman s'appliquant aux systèmes non-linéaires, n'atteint qu'une précision du premier ordre. De plus, contrairement au filtre de Kalman étendu, l'UKF ne nécessite pas de calcul explicite lourd de linéarisation (calculs de matrices hessiennes ou jacobiennes).

L'étape d'obtention consiste en une détermination initiale, éventuellement provisoire, du débit que l'on cherche à évaluer. Elle peut être réalisée par mesure, par calcul (notamment grâce à l'équation d'état (1) de l'UKF) ou par combinaison des deux. En d'autres termes, l'état x de l'UKF comprend le débit que l'on cherche à évaluer. Le débit brut obtenu par l'étape d'obtention est ensuite soumis à l'étape de correction.

Comme indiqué précédemment, l'étape de correction fait appel aux résultats de l'étape de mesure. L'étape de mesure ne suppose pas que la mesure de niveau soit disponible en permanence : elle consiste à vérifier si une mesure est disponible et, si c'est le cas, à la relever. Si la mesure n'est pas disponible à un instant, l'étape de mesure ne renvoie aucune donnée à l'étape de correction et, par conséquent, le débit obtenu à cet instant n'est pas corrigé.

Le procédé d'évaluation peut servir à évaluer un débit instantané, un débit cumulé ou toute grandeur calculée à partir du débit.

Le procédé d'évaluation fournit donc une évaluation du débit du fluide qui est précise, cohérente avec les mesures de niveau dans le réservoir et qui corrige intrinsèquement, grâce à l'utilisation d'un UKF, les biais et erreurs de l'étape d'obtention. De plus, ce procédé est compatible avec toute forme de réservoir, notamment des réservoirs non-cylindriques. En outre, l'étape d'obtention permet, grâce à l'équation d'état de l'UKF, d'évaluer le débit du fluide de manière précise même lorsque les mesures de niveau ne sont pas disponibles. Enfin, ce procédé s'adapte parfaitement aux variations de débit et aux variations de point de fonctionnement du système sur lequel le débit est mesuré.

Dans certains modes de réalisation, la valeur brute de débit est mesurée par au moins un capteur, notamment un débitmètre. Dans ces modes de réalisation, l'étape d'obtention est réalisée essentiellement par le débitmètre et l'étape de correction permet de corriger le débitmètre à partir des valeurs de niveau mesurées. Lorsqu'un débitmètre est présent, le procédé d'évaluation permet donc de le fiabiliser, de le recaler et/ou de le ré-étalonner.

Dans certains modes de réalisation, la valeur brute de débit est calculée par une estimation mathématique à coefficients évalués itérativement, notamment par un réseau de neurones artificiels. Par estimation mathématique à coefficients évalués itérativement, on exclut les mesures physiques et les expressions mathématiques dont les coefficients sont constants et connus explicitement a priori. Les coefficients évalués itérativement peuvent être évalués notamment par adaptations successives d'un modèle à un ensemble de données, comme le fait un réseau de neurones artificiels, ou par convergence d'une solution d'équation résolue numériquement.

Un réseau de neurones artificiels (RNA) est un modèle de calcul comportant un ou plusieurs neurones, chaque neurone étant doté d'une fonction de transfert. Le RNA possède donc une fonction de transfert globale permettant de calculer au moins une sortie en fonction d'au moins une entrée. Les fonctions de transfert de chaque neurone ou les poids relatifs des neurones dans le réseau peuvent être pondérés par des coefficients appelés poids synaptiques (ou simplement poids) et biais. Les poids peuvent être modulés en fonction d'un apprentissage du RNA. L'apprentissage consiste à fournir au RNA un ensemble de situations dans lesquelles les entrées et les sorties sont connues. Au cours de l'apprentissage, le RNA adapte ses poids synaptiques et biais pour qu'ils soient conformes aux situations apprises, éventuellement avec une certaine tolérance. Les RNA sont donc des expressions mathématiques dont les coefficients sont adaptés itérativement en fonction de l'apprentissage. Les poids et biais, une fois déterminés à l'issue de la phase d'apprentissage, peuvent ensuite rester constants ou non pendant la phase d'exploitation.

Le RNA est donc capable de modéliser intelligemment un système en apprenant à partir du comportement réel dudit système, sans nécessiter de connaître les lois théoriques qui le gouvernent. Le RNA possède de plus une capacité de généralisation (aussi appelée « inférence »), c'est-à-dire qu'il est capable de déterminer les valeurs de sortie d'une situation dont on lui donne les données d'entrée même si cette situation n'a pas été apprise pendant la phase d'apprentissage, à condition que les entrées soient contenues dans un domaine de validité (en d'autres termes, on s'assure que les valeurs des entrées de la situation à calculer sont comprises entre ou proche des valeurs d'entrée extrêmes qui ont servi pour l'apprentissage). Ceci est particulièrement utile pour des systèmes présentant une large gamme de points de fonctionnement et pour lesquels il est industriellement inenvisageable de paramétrer explicitement toutes les situations possibles. Pour une meilleure précision, on doit vérifier que les situations d'apprentissages constituent un maillage suffisamment raffiné du domaine de fonctionnement. Enfin, le RNA est un système aisément modulable. Ces avantages sont également valables dans le cas d'autres types d'expressions mathématiques à coefficients évalués itérativement.

De plus, dans de tels modes de réalisation, l'étape d'obtention est donc réalisée par une estimation mathématique, ce qui permet de se passer de débitmètre et de réaliser un gain en coûts, en masse et en encombrement.

A l'inverse de certains systèmes connus par ailleurs, pour lesquels un filtre de Kalman inodore est utilisé pour déterminer les poids synaptiques d'un RNA, le présent procédé utilise une expression mathématique à coefficients évalués itérativement (notamment un RNA) en l'intégrant à l'étape d'obtention de l'UKF. Le fonctionnement et la finalité sont donc tout à fait différents.

Dans certains modes de réalisation, la masse de fluide dans le réservoir est une fonction non-linéaire du niveau de fluide dans le réservoir. Dans certains modes de réalisation, le réservoir est non cylindrique. Dans certains autres modes de réalisation, le réservoir est un cylindre dont les génératrices ne sont pas perpendiculaires au niveau moyen du fluide dans le réservoir.

On rappelle qu'un cylindre est une surface définie par le passage d'une droite de direction fixe, appelée génératrice, le long d'une courbe plane fermée. On désigne aussi par cylindre un tronc de cylindre, c'est-à-dire le solide délimité par un cylindre et deux plans parallèles, les deux plans étant non parallèles aux génératrices du cylindre.

Les caractéristiques précitées traduisent la forme de la plupart des réservoirs, notamment les réservoirs à fond sphérique. Lorsque le réservoir est non-cylindrique, la vitesse de vidage du réservoir (c'est-à-dire la dérivée du niveau en fonction du temps) n'est pas une fonction affine du débit de sortie du réservoir. Comme indiqué précédemment, cette non-linéarité est particulièrement bien prise en compte par l'UKF.

Dans certains modes de réalisation, un état du filtre de Kalman inodore comprend un biais de la valeur brute de débit. Dans certains modes de réalisation, on fait l'hypothèse que le débit est égal à la somme du débit brut obtenu à l'étape d'obtention et d'un biais (positif ou négatif). Plus généralement, dans d'autres modes de réalisations, on fait l'hypothèse que le débit est une fonction affine du débit brut obtenu, le biais étant alors un vecteur constitué par les coefficients de la fonction affine. Le fait que l'état du filtre de Kalman comprenne le biais en soi permet d'extraire et d'utiliser la valeur du biais par la suite, par exemple pour détecter une anomalie lorsque la valeur du biais excède un certain seuil.

Dans certains modes de réalisation, un état du filtre de Kalman inodore comprend la valeur brute de débit ainsi qu'un biais de cette valeur.

Dans certains modes de réalisation, le procédé d'évaluation comprend en outre une étape de filtrage des fluctuations du niveau de fluide. Les fluctuations du niveau de fluide désignent les variations transitoires du niveau de fluide à volume de fluide constant dans le réservoir, par opposition avec les changements de niveau dus au débit de fluide. Les fluctuations du niveau de fluide peuvent être dues au ballottement du fluide dans le réservoir ou au bruit large bande du signal (bruit blanc lié essentiellement aux interactions du réservoir avec son environnement mécanique et hydraulique). Cette étape de filtrage peut être réalisée par exemple avec un filtre passe-bas ou en prévoyant, dans l'UKF, une réjection du mode propre du ballottement. Par exemple, il est possible d'écrire le niveau de fluide sous une forme comprenant une fonction de fluctuation et de déterminer les coefficients de cette fonction de fluctuation (par exemple les amplitudes, fréquences et phases des termes principaux de sa décomposition en série de Fourier) en incluant ces coefficients dans le vecteur d'état de l'UKF.

Une telle étape de filtrage permet d'atténuer le bruit des mesures de niveau et de rendre encore plus fiable le procédé d'évaluation.

Le présent exposé concerne également un procédé d'évaluation de deux débits de fluides provenant respectivement d'un premier réservoir et d'un deuxième réservoir, dans lequel on évalue les débits des fluides en mettant en œuvre séparément : un premier procédé d'évaluation comprenant une étape d'estimation des débits des fluides ($\hat{d}_k$) à l'aide d'un filtre de Kalman inodore, aucune mesure de niveau n'est prise en compte dans une étape de correction du filtre de Kalman inodore; un deuxième procédé du type proposé précédemment, dans lequel seule une mesure de niveau du premier réservoir est prise en compte ; un troisième procédé du type proposé précédemment, dans lequel seule une mesure de niveau du deuxième réservoir est prise en compte ; un quatrième procédé du type proposé précédemment, dans lequel les deux mesures de niveau sont prises en compte ; et dans lequel on renvoie les débits évalués par celui des quatre procédés qui prend en compte exactement les mesures disponibles et uniquement celles-ci.

Dans le présent procédé, on cherche à évaluer deux débits dont les valeurs sont corrigées sur la base de deux mesures de niveau. Les deux mesures de niveau peuvent être simultanément disponibles, simultanément indisponibles, ou seulement l'une ou l'autre des deux peut être disponible. Il y a donc quatre situations de disponibilité des mesures de niveau.

L'idée d'un tel procédé est d'évaluer les deux débits selon quatre variantes du procédé précédemment décrit puis de sélectionner la variante la plus appropriée aux mesures de niveau disponibles. Les quatre procédés diffèrent en ce qu'ils prennent en compte partiellement, totalement ou aucunement les mesures de niveau renvoyées par l'étape de mesure. Chacun des quatre procédés peut donc être optimisé en fonction des mesures qu'il est apte à prendre en compte.

Parmi les quatre procédés utilisés, on retient celui qui prend en compte exactement les mesures disponibles, c'est-à-dire celui qui, à l'instant considéré, prend en compte les mesures renvoyées par l'étape de mesure et ne prend pas en compte les mesures non renvoyées par l'étape de mesure. Cette sélection consiste donc à choisir le procédé qui est le plus adapté à la situation considérée. La sélection parmi les quatre procédés peut s'effectuer avant, après ou pendant l'application des procédés. En outre, ce procédé est généralisable à un nombre plus important de débits et/ou de cas de disponibilités des mesures.

Le présent exposé concerne également un système d'évaluation d'un débit d'un fluide provenant d'un réservoir, comprenant des moyens de mesure aptes à mesurer un niveau de fluide dans le réservoir et caractérisé en ce qu'il comprend des moyens d'estimation du débit du fluide à l'aide d'un filtre de Kalman inodore, lesdits moyens d'estimation comprenant des moyens d'obtention du débit brut de fluide ainsi que des moyens de correction reliés aux moyens d'obtention et aux moyens de mesure et configurés pour corriger le débit brut obtenu par les moyens d'obtention en fonction du niveau mesuré par les moyens de mesure. Un tel système est particulièrement adapté pour la mise en œuvre du procédé précédemment décrit.

Le présent exposé concerne également un système propulsif, notamment pour lanceur spatial, comprenant deux réservoirs contenant chacun un ergol, une chambre de combustion dans laquelle sont injectés les deux ergols, et un système d'évaluation du débit d'au moins un des ergols tel que précédemment décrit. Pour un système propulsif, une estimation correcte des débits d'ergol est particulièrement importante. En outre, un allègement en masse et une diminution de l'encombrement dus à la suppression des débitmètres sont également des gains recherchés.

Si un tel système propulsif comprend un système d'évaluation des deux débits, ou un système d'évaluation de chacun des débits, il est possible de calculer le rapport de mélange des ergols, qui est le rapport des débits des ergols à l'entrée de la chambre de combustion. Le rapport de mélange de deux ergols est un paramètre important pour le pilotage du système propulsif.

Le présent exposé concerne également un programme comportant des instructions pour l'exécution des étapes du procédé d'évaluation selon l'un quelconque des modes de réalisations précédemment décrits lorsque ledit programme est exécuté par un ordinateur.

Dans un mode particulier de réalisation, les différentes étapes du procédé d'évaluation sont déterminées par des instructions de programmes d'ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé concerne également un support d'enregistrement lisible par un ordinateur sur lequel est enregistré un programme d'ordinateur comprenant des instructions pour l'exécution des étapes du procédé d'évaluation selon l'un quelconque des modes de réalisation précédemment décrits.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :

- la figure 1 représente un système propulsif équipé d'un système d'évaluation de débit selon un premier mode de réalisation;
- la figure 2 représente la masse d'ergol contenue dans les réservoirs du système propulsif de la figure 1 en fonction du niveau ;
- les figures 3A et 3B représentent la disponibilité des mesures des sondes de niveau des réservoirs en fonction du temps ;
- les figures 4A à 4C illustrent l'application du système d'évaluation de débit de la figure 1 ;
- la figure 5 représente un système propulsif équipé d'un système d'évaluation de débit selon un deuxième mode de réalisation ;
- la figure 6 représente un circuit fluide équipé d'un système d'évaluation de débit selon un troisième mode de réalisation.

DESCRIPTION DÉTAILLÉE DE L'INVENTION

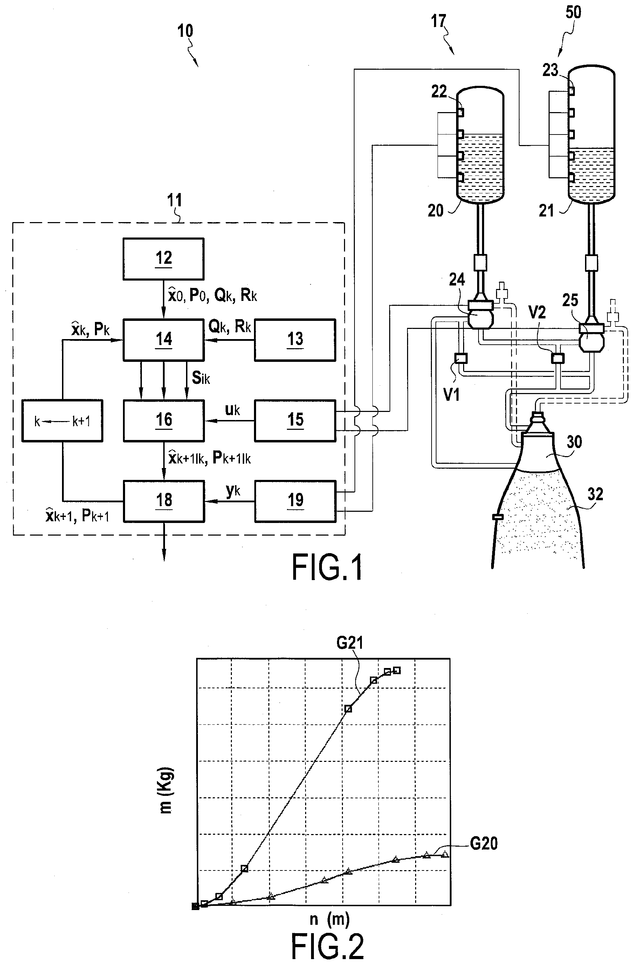

La figure 1 présente un système propulsif 50, notamment pour lanceur spatial, comprenant deux réservoirs 20, 21 contenant chacun un ergol (par exemple respectivement de l'hydrogène liquide et de l'oxygène liquide), une chambre de combustion 30 dans laquelle sont injectés les deux ergols, et un système d'évaluation 10 des débits des ergols à l'entrée de la chambre de combustion 30. Les gaz de combustion développent une poussée lors de leur éjection dans une tuyère 32 en aval de la chambre de combustion 30.

En l'espèce, le système propulsif 50 est un système à flux intégré dans lequel de l'ergol chauffé (par exemple de l'hydrogène) entraîne des turbopompes 24, 25 avant d'être réinjecté dans la chambre de combustion 30. Deux vannes de régulation V1, V2 servent à moduler le débit d'ergol chauffé entrant dans les turbines des turbopompes 24, 25, afin de contrôler le débit d'ergol liquide pompé par les turbopompes 24, 25.

Comme on peut le voir sur la figure 1, les réservoirs 20, 21 sont des réservoirs non-cylindriques. Plus particulièrement, dans l'exemple considéré, ce sont des réservoirs à fond sphérique. Il s'ensuit que la relation entre le niveau d'ergol dans chaque réservoir et la masse d'ergol dans ledit réservoir est non linéaire. En l'espèce, un exemple d'une telle relation est donné par la figure 2. La courbe G20 (respectivement courbe G21) représente la masse d'ergol m dans le réservoir 20 (resp. le réservoir 21) en fonction du niveau d'ergol n dans ce même réservoir. Chacune des courbes G20, G21 se compose d'une partie centrale sensiblement linéaire (correspondant à une portion centrale sensiblement cylindrique du réservoir). Pour les niveaux les plus hauts ou les niveaux les plus bas, les courbes sont aplaties, ce qui signifie que les réservoirs sont rétrécis par rapport à leur portion centrale. Cette allure de courbe est caractéristique d'une forme hémisphérique ou analogue aux extrémités des réservoirs. Dans le cas présent, la non-linéarité de la relation entre le débit d'ergol à l'entrée de la chambre de combustion 30 et le niveau d'ergol dans les réservoirs 20, 21 provient non seulement de la forme des réservoirs (non-linéarité géométrique), comme expliqué ci-dessus, mais aussi d'une deuxième non-linéarité liée à l'expression du débit en fonction des paramètres de fonctionnement du système propulsif (non-linéarités mécanique et thermodynamique).

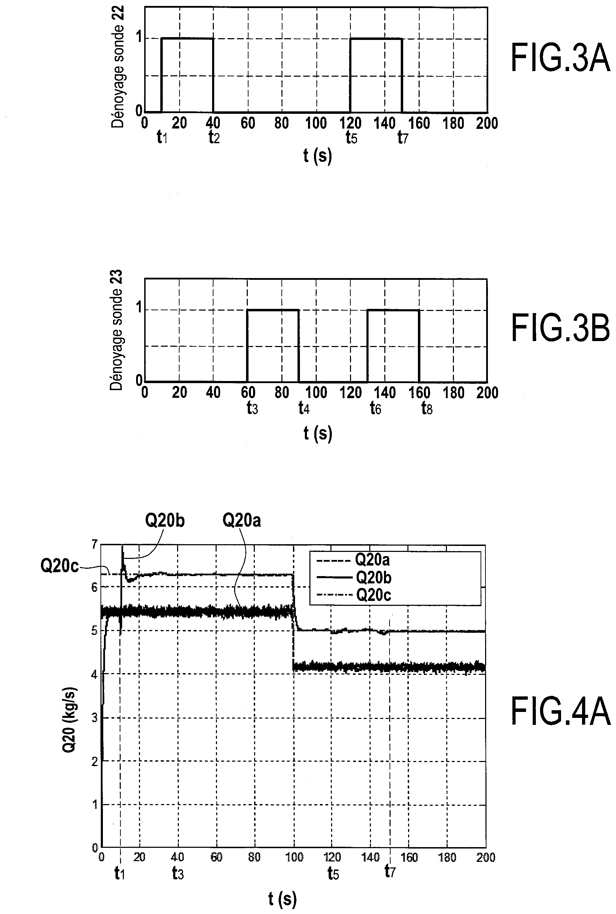

Comme représenté sur la figure 1, les réservoirs 20, 21 sont équipés de sondes de niveau respectives 22, 23, destinées à mesurer le niveau dans le réservoir. La taille et la forme des réservoirs ainsi que la configuration des sondes de niveau 22, 23 peuvent varier d'un réservoir à l'autre. Les sondes de niveau 22, 23 consistent en un ensemble de capteurs. Ces capteurs ne renvoient un signal qui n'est pris en compte que lorsqu'ils sont dénoyés, c'est-à-dire lorsqu'ils sont au moins partiellement au-dessus de la surface libre de l'ergol contenu dans le réservoir. Par exemple, des courbes de disponibilité des sondes de niveau 22, 23 en fonction du temps t sont représentées respectivement sur les figures 3A et 3B lors du fonctionnement du système propulsif 50. Les réservoirs 20, 21 se vidant à vitesses différentes, les courbes de disponibilité des sondes de niveau 22, 23 sont généralement différentes. La disponibilité vaut 1 lorsque la sonde de niveau est en cours de dénoyage et capable de renvoyer une mesure ; la disponibilité vaut 0 sinon.

Comme indiqué sur la figure 3A, la sonde de niveau 22, composée de plusieurs tronçons, est en cours de dénoyage entre t1=10s et t2=40s d'une part et entre t5=120s et t7=150s d'autre part. Pendant le reste du temps, sa disponibilité est nulle, c'est-à-dire que la sonde de niveau 22 ne renvoie aucune mesure : le niveau d'ergol se trouve entre deux capteurs consécutifs.

De manière analogue, comme indiqué sur la figure 3B, la sonde de niveau 23 est en cours de dénoyage entre t3=60s et t4=90s d'une part et entre t6=130s et t8=160s d'autre part. Pendant le reste du temps, la sonde de niveau 23 n'est pas disponible.

Il ressort des figures 3A et 3B que les sondes de niveau 22, 23 fournissent des mesures par intermittence. De plus, les périodes de disponibilité des sondes de niveau 22, 23 ne coïncident pas nécessairement. En effet, la première période de dénoyage de la sonde de niveau 22, entre t1 et t2, est complètement disjointe de la première période de dénoyage de la sonde de niveau 23, entre t3 et t4, tandis que la deuxième période de dénoyage de la sonde de niveau 22, entre t5 et t7, chevauche la deuxième période de dénoyage de la sonde de niveau 23, entre t6 et t8, pendant dix secondes de t6 à t7. Les mesures fournies par les sondes de niveau 22, 23 peuvent donc ne pas être simultanément disponibles.

Les sondes de niveau 22, 23 sont connectées à un système d'évaluation de débit 10, comme on peut le voir sur la figure 1. Comme indiqué précédemment, le système d'évaluation 10 comprend des moyens de mesure 17 aptes à mesurer le niveau de fluide dans le réservoir. Les moyens de mesure 17 comprennent les sondes de niveau 22, 23 et une carte d'acquisition 19 à laquelle celles-ci sont connectés.

Le système d'évaluation 10 comprend des moyens d'estimation du débit de chaque ergol à l'aide d'un filtre de Kalman inodore. Ces moyens sont des moyens de calcul comprenant notamment un ordinateur 11 dont fait partie la carte d'acquisition 19. En l'espèce, les moyens d'estimation comprennent un dispositif d'initialisation 12, un dispositif de transformation 14, un dispositif d'obtention 16 et un dispositif de correction 18. Le système d'évaluation 10 utilise comme données d'entrée, outre les mesures de niveau collectées par les moyens de mesure 17, des données sur le fonctionnement du système propulsif 50. Par exemple, on a représenté un dispositif d'acquisition 15 relié aux turbopompes 24, 25 et recevant comme données la vitesse de rotation des turbopompes et la pression des ergols en sortie des turbopompes. D'autres données pourraient également être collectées. Par ailleurs, le dispositif d'acquisition 15 pourrait être relié à d'autres composants ou emplacements du système propulsif 50 pour acquérir d'autres données. Par exemple, il pourrait également être connecté à la chambre de combustion 30 pour mesurer la pression des gaz dans la chambre de combustion 30.

Le filtre de Kalman inodore est un filtre itératif, chaque nouvelle estimation étant calculée à partir de l'état précédent et de données courantes. Les valeurs renvoyées par le dispositif de correction 18 servent à la fois de valeurs d'entrées au dispositif de transformation 14, ce qui assure le fonctionnement itératif du système d'évaluation 10, mais aussi de valeurs de sortie globales. Ces valeurs de sortie peuvent être utilisées à différentes fins, par exemple pour la surveillance du fonctionnement du moteur ou pour la régulation du moteur, notamment pour l'ajustement de l'ouverture des vannes de contournement V1, V2 en fonction des débits évalués.

Sur la figure 1, k étant l'instant courant (ou l'itération courante), on a noté :

- $x_k$ l'état courant, $\hat{x}_k$ une estimation de sa valeur moyenne et $P_k$ sa matrice de covariance;
- $Q_k$ et $R_k$ les matrices de covariance respectives du bruit d'état $w_k$ et du bruit de mesure $v_k$ du filtre de Kalman (cf. les équations (1) et (2) précédemment exposées), supposées connues a priori, sachant que le bruit de mesure peut être mesuré ;
- $S_{ik}$ le $i^{ème}$ sigma-point à l'instant k ;
- $u_k$ les données d'entrée ;
- $\hat{x}_{k+1|k}$ la valeur brute de l'état x obtenue à l'instant k+1 connaissant sa même valeur à l'instant k ;
- $P_{k+1|k}$ la matrice de covariance brute de l'état x à l'instant k+1 connaissant la matrice de covariance $P_k$ ;
- $y_k$ les valeurs mesurées issues des moyens de mesure 17 ;
- $\hat{x}_{k+1}$ la valeur de l'état x à l'instant k+1 corrigée en fonction des mesures de niveau mesurées par les moyens de mesure 17 et $P_{k+1}$ sa matrice de covariance.

L'état $x_k$ du filtre de Kalman inodore choisi dans le présent mode de réalisation comprend le niveau d'ergol $n_k$, le débit $q_k$ estimé par le RNA et le biais $E_k$ de ce débit. On a donc $x_k = [n_k\ q_k\ E_k]^T$. L'état de l'UKF peut comprendre autant de niveaux, de débits et de biais que le nombre de débits que l'on cherche à évaluer par l'UKF. Dans l'exemple de la figure 1, les grandeurs n, q, E sont des vecteurs comprenant chacun deux composantes dont l'une se réfère à l'ergol du réservoir 20 et l'autre à l'ergol du réservoir 21. Pour des raisons de clarté, sauf mention contraire, la description qui suit ne traitera que d'un débit mais les éléments présentés sont également valables dans le cas de plusieurs débits.

Le dispositif d'initialisation 12 est configuré pour fournir au dispositif de transformation 14 un état initial $\hat{x}_0, P_0$, fonction des caractéristiques du système propulsif 50.

Le dispositif de transformation 14 est configuré pour réaliser la transformation inodore de l'UKF à chaque instant k, c'est-à-dire pour créer un ensemble de sigma-points $S_{ik}$ à partir de la valeur $\hat{x}_k$ et de la matrice de covariance $P_k$ approximant l'état courant $x_k$.

Le dispositif d'obtention 16 est configuré pour réaliser l'étape d'obtention du procédé d'évaluation. Dans le présent mode de réalisation, l'étape d'obtention est implémentée par un réseau de neurones artificiels. Ce RNA fournit les débits bruts d'ergol en entrée des turbopompes correspondantes 24, 25 en prenant comme entrées la pression dudit ergol en sortie de la pompe, la pression des gaz dans la chambre de combustion 30 et/ou la vitesse de rotation de ladite turbopompe. Toutes choses égales par ailleurs, plus il y a de données d'entrées (qui sont autant de critères de discrimination des situations), plus l'estimation fournie par le RNA est précise. En particulier, le RNA peut être de type perceptron multi-couches, notamment avec une seule couche cachée pour les différents jeux d'entrées, établi à partir d'une base de données correspondant à une cartographie issue de données expérimentales ou de modèles physiques.

Empiriquement, on observe que le débit fourni en sortie du RNA est bruité. Dans ce mode de réalisation, on lui applique un filtre passe-bas, ici du premier ordre. En notant $q_k$ le débit obtenu par le dispositif d'obtention 16 à l'instant k, $RNA_k$ la fonction appliquée par le RNA aux données d'entrée $u_k$, $\Delta t$ le pas de temps entre k et k+1, et T la constante de temps du filtre (ici de l'ordre de la seconde), un exemple d'un tel filtre est une expression du type :

$$q_{k+1} = e^{-\frac{\Delta t}{T}} \times q_k + \left(1 - e^{-\frac{\Delta t}{T}}\right) \times RNA_k(u_k) \qquad (3).$$

On suppose en outre que le débit d est la somme du débit brut q renvoyé par le RNA et d'un biais inconnu E, positif ou négatif, représentant les effets des erreurs de modélisation du débit. En d'autres termes, pour chaque ergol, on a la relation

$$d_k = q_k + E_k \quad (4).$$

Dans d'autres modes de réalisation, l'équation (4) peut être généralisée sous la forme $d_k = E_k^1 q_k + E_k^2$, dans laquelle le biais E est vectoriel et s'applique au débit sous la forme d'une fonction affine. En particulier, le coefficient

$E_k^1$ permet la prise en compte d'un biais multiplicatif, tandis que le coefficient $E_k^2$ permet la prise en compte d'un biais additif. Dans le premier exemple de l'équation (4) ci-dessus, on a $E_k^1 = 1$ et $E_k^2 = E_k$.

On fait l'hypothèse, pour le dispositif d'obtention 16, que le biais E est constant ; ceci n'empêche pas le biais E d'être corrigé ultérieurement par le dispositif de correction 18. Cette hypothèse se traduit par la relation

$$E_{k+1} = E_k \quad (5).$$

D'autres types de relations d'évolution du biais $E_k$ sont possibles pour le dispositif d'obtention 16, par exemple un biais proportionnel à la poussée du système propulsif 50, ou encore un biais croissant en fonction de la distance quadratique par rapport au point de fonctionnement nominal pour lequel on peut supposer que le biais est le plus petit (puisque le système y est le mieux connu par définition). Ainsi, les équations (3), (4) et (5) définissent des équations d'évolution du débit s'appuyant sur le RNA implémenté dans le dispositif d'obtention 16.

Par ailleurs, le dispositif d'obtention 16 comprend également une modélisation de l'évolution des niveaux d'ergols $n_k$ dans les réservoirs. En écrivant que la masse d'ergol $m_k$ diminue à chaque pas de temps $\Delta t$ d'une quantité $\Delta t \times d_k$ et que la masse est reliée au niveau par les fonctions G20, G21 (cf. figure 2 ; on désignera ci-après ces fonctions de manière générique par la lettre G), on obtient pour chaque ergol la relation :

$$n_{k+1} = G\big(G^{-1}(n_k) - \Delta t \times (q_k + E_k)\big) \quad (6)$$

dans laquelle $G^{-1}$ est la fonction réciproque de la fonction G.

Le fonctionnement du dispositif d'évaluation 10 va maintenant être détaillé. Le dispositif d'initialisation 12 initialise l'état initial $x_0$ en prenant par exemple le niveau de remplissage initial des réservoirs, un débit nul et un biais nul. Le dispositif d'initialisation 12 fournit au dispositif de transformation 14 les valeurs $\hat{x}_0, P_0$ correspondant à l'état initial. Pour ce calcul, l'état x est supposé être une variable aléatoire gaussienne de moyenne $\bar{x}$ et de covariance P.

A chaque itération k, le dispositif de transformation 14 calcule un vecteur d'état élargi $X_k = [x_k \ v_k \ w_k]^T$. Sa matrice de covariance $P_{Xk}$ est la matrice diagonale par blocs formée par les matrices de covariances respectives $P_k$, $Q_k$, $R_k$. Les matrices de covariance $Q_k, R_k$ sont obtenues empiriquement et stockées dans une mémoire 13. Alternativement ou en complément, les covariances de mesure $R_k$ peuvent être calculées automatiquement par les estimations des variances des bruits de mesure $v_k$ sur une fenêtre temporelle glissante.

Le dispositif de transformation 14 génère un ensemble de sigma-points correspondant à la variable aléatoire gaussienne $\hat{X}_k$, $P_{Xk}$ approximant l'état courant $X_k$. Les sigma-points $S_{ik}$ sont générés selon la technique classique du filtre de Kalman inodore, qui ne sera pas détaillée ici. Chaque sigma-point $S_{ik}$, qui a la même structure que le vecteur $\hat{X}_k$, est fourni au dispositif d'obtention 16.

Le rôle du dispositif d'obtention 16 est d'obtenir une estimation initiale (valeur brute) du vecteur d'état à l'instant k+1 en connaissant une estimation de ce vecteur à l'instant k et des données du système propulsif 50 (en l'occurrence les données d'entrée $u_k$). Comme indiqué précédemment, cette obtention est ici réalisée à l'aide des équations (3), (4), (5), (6) qui font appel à un RNA. Dans la mesure où le RNA est un modèle prédictif, l'étape d'obtention s'appelle ici plus particulièrement étape de prédiction. Les évolutions des bruits $v_k$ et $w_k$ sont déterminées selon les méthodes classiques employées lors de l'utilisation d'un filtre de Kalman inodore. Pour le bruit d'état, dans le cas particulier où on utilise un modèle que l'on construit (comme un RNA), on peut confronter les résultats de ce modèle à des situations connues pour obtenir une cartographie de la précision du RNA dans son domaine de validité.

Les valeurs des sigma-points $S_{ik+1}$ à l'instant k+1, fournies par le RNA, sont alors utilisées pour déterminer, en sortie du dispositif d'obtention 16, une valeur obtenue (prédite) $\hat{x}_{k+1|k}$ de l'état x à l'instant k+1 connaissant la valeur $\hat{x}_k$ à l'instant k, et la matrice de covariance $P_{k+1|k}$ de l'état x à l'instant k+1 connaissant la matrice de covariance $P_k$. Comme indiqué sur la figure 1, ces valeurs sont ensuite fournies au dispositif de correction 18.

Le dispositif de correction 18 corrige alors les valeurs obtenues par le dispositif d'obtention 16 lorsque des mesures sont disponibles. Pour chaque ergol, si la mesure de niveau est disponible (c'est-à-dire si la sonde de niveau correspondante est dénoyée), la valeur de l'état $x_{k+1}$ est corrigée en fonction de l'écart entre le niveau mesuré $y_k$ et le niveau prédit (niveau obtenu) $\hat{y}_k$. La valeur de l'état est notamment corrigée d'une valeur proportionnelle audit écart, le facteur de proportionnalité étant appelé « gain de Kalman ». Le gain de Kalman est calculé de manière classique à partir des sigma-points et de la mesure de niveau. Sinon, si la mesure de niveau n'est pas disponible, on garde la valeur de l'état $x_{k+1}$ déterminée à l'aide de l'équation (6) par le dispositif d'obtention 16, par exemple en fixant le gain de Kalman à zéro. Selon qu'aucune, une ou deux mesures de niveau sont disponibles (quatre cas possibles), le dispositif de correction 18 corrige en conséquence les débits obtenus par le dispositif d'obtention 16. Le dispositif de correction 18 comprend donc une fonction de sélection intégrée s'adaptant aux mesures disponibles.

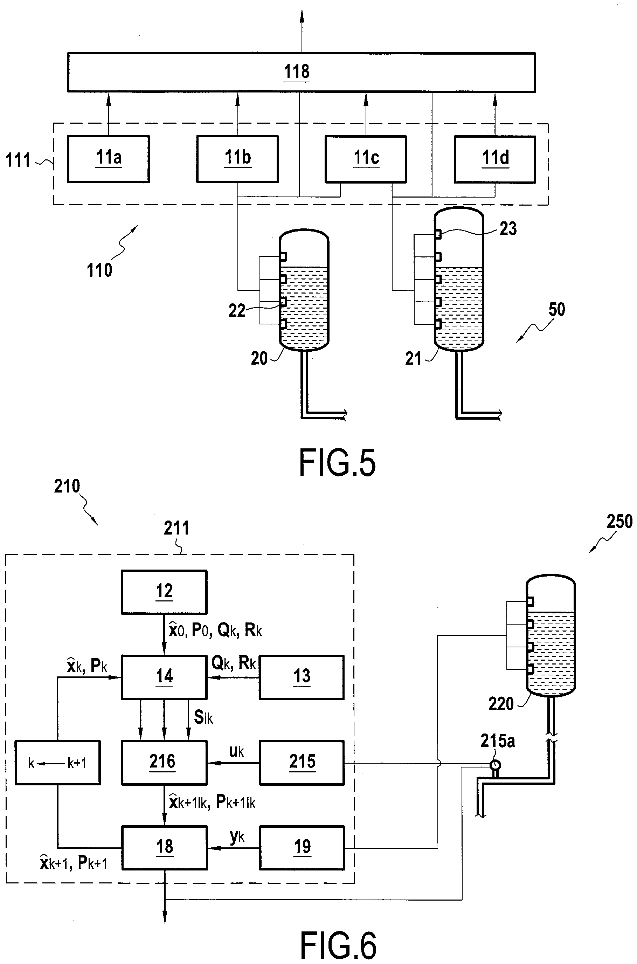

Une variante est représentée sur la figure 5, dans laquelle la distinction des cas de disponibilité des mesures est implémentée en arrangeant en parallèle, dans le système d'évaluation 110, quatre fonctions de calcul 11a, 11b, 11c, 11d, intégrées dans un calculateur 111, chacune paramétrée pour couvrir l'un des quatre cas précités de disponibilité des mesures. Sur la figure 5, les parties inchangées du système propulsif 50 (notamment la chambre propulsive 30 et les entrées vers les calculateurs) n'ont pas été représentées. En outre, chaque fonction de calcul 11a, 11b, 11c, 11d a une architecture similaire à celle intégrée dans l'ordinateur 11.

La fonction de calcul 11a évalue les débits des fluides issus des réservoirs 20, 21 sans prendre en compte de mesure de niveau. Le dispositif de correction 18 prévu au sein du calculateur 11a n'est donc pas utilisé. La fonction de calcul 11b évalue les débits des fluides issus des réservoirs 20, 21 en ne prenant en compte que les mesures renvoyées par la sonde de niveau 22, lorsqu'elles sont disponibles. De manière similaire, la fonction de calcul 11d évalue les débits des fluides issus des réservoirs 20, 21 en ne prenant en compte que les mesures renvoyées par la sonde de niveau 23, lorsqu'elles sont disponibles. Enfin, la fonction de calcul 11c évalue les débits des fluides issus des réservoirs 20, 21 en prenant en compte les mesures renvoyées par les deux sondes de niveau 22, 23, lorsqu'elles sont disponibles.

Les valeurs de débits évaluées par les fonctions de calcul 11a, 11b, 11c, 11d sont transmises à un dispositif de sélection 118. Le dispositif de sélection 118 est également relié aux sondes de niveau 22, 23 afin d'en connaître la disponibilité. Le dispositif de sélection 118 effectue une sélection, parmi les quatre ensembles de débits reçus, en fonction de la disponibilité des mesures renvoyées par les sondes de niveau 22, 23. Le dispositif de sélection 118 renvoie, en sortie, l'ensemble de débits fourni par le calculateur qui prend en compte exactement les mesures disponibles. Par exemple, si seule la mesure renvoyée par la sonde de niveau 22 est disponible, le dispositif de sélection 118 renverra l'ensemble de débits reçu du calculateur 11b.

En variante, le dispositif de sélection 118 peut se trouver en amont ou au même niveau que les fonctions de calcul 11a, 11b, 11c, 11d.

Dans tous les cas, le système d'évaluation 10, 110 permet ainsi un recalage de la valeur obtenue par le dispositif d'obtention 16 sur la base de mesures discontinues et asynchrones.

Le procédé mis en œuvre par le système d'évaluation 10 permet une évaluation instantanée de débits. Comme on peut le voir sur la figure 1, afin d'évaluer des débits successifs, une boucle de récurrence permet de passer à l'instant suivant et de réitérer les étapes précédemment décrites. A chaque étape, le débit d'ergol évalué, c'est-à-dire obtenu puis corrigé, est $\hat{d}_k = \hat{q}_k + \hat{E}_k$, relation dans laquelle le débit brut estimé $\hat{q}_k$ est déterminé essentiellement par le RNA et le biais estimé $\hat{E}_k$ est déterminé essentiellement par l'UKF.

Un exemple d'application va maintenant être décrit en référence aux figures 3A-3B et 4A-4C. Les figures 4A-4C représentent le fonctionnement du système propulsif 50 pendant deux phases (deux points de fonctionnement) de cent secondes chacune. La figure 4A montre l'évolution du débit d'ergol issu du réservoir 20 et entrant dans la chambre de combustion 30, estimé par un RNA seul (courbe Q20a) et par le dispositif d'évaluation 10 (courbe Q20b). La valeur réelle du débit est tracée à titre de comparaison (courbe Q20c). Comme on peut le voir sur la figure 4A, durant les premières secondes, le débit estimé par un RNA seul (courbe Q20a) est plus proche du débit réel (courbe Q20c) que le débit estimé par le dispositif d'évaluation (courbe Q20b). Ceci est dû aux valeurs arbitraires qui peuvent être fournies par le dispositif d'initialisation 12. Après quelques secondes, cet écart est résorbé.

A l'instant t=t1 (10s), comme indiqué sur la figure 3A, la sonde de niveau 22 est dénoyée et les moyens de mesure 17 acquièrent des mesures de niveau. Le dispositif de correction 18 peut donc, sur la base de ces mesures, corriger les valeurs fournies par le dispositif d'obtention 16. Il s'ensuit un régime transitoire de la courbe Q20b, puis une stabilisation du débit évalué à un niveau proche du débit réel (courbe Q20c). La sonde de niveau 22 reste dénoyée jusqu'à t=t3 (40s) puis elle est à nouveau indisponible. Entre t3 et t5, le débit évalué représenté par la courbe Q20b est évalué uniquement à l'aide du dispositif d'obtention 16 puisque le dispositif de correction 18 n'effectue aucune action. On remarque qu'à partir du premier recalage sur la base de mesures, et notamment de part et d'autre du changement de point de fonctionnement (t=100s), le débit évalué par le dispositif d'évaluation 10 suit le débit réel (courbe Q20c) avec une grande précision tandis que le débit évalué par un RNA seul (courbe Q20a) garde toujours un biais ou décalage à peu près constant par rapport au débit réel.

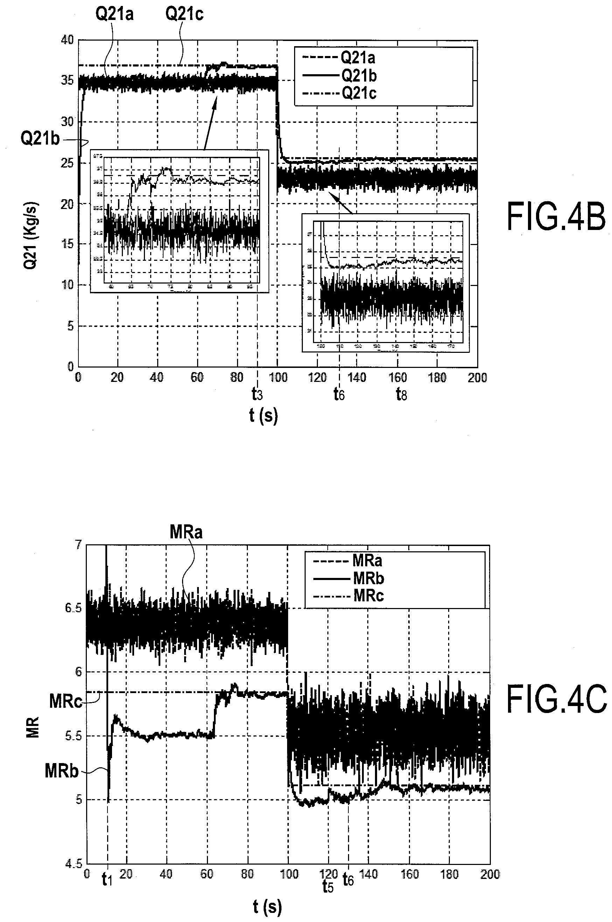

La figure 4B, analogue à la figure 4A, concerne l'évolution du débit d'ergol issu du réservoir 21 et entrant dans la chambre de combustion 30. La courbe Q21a représente le débit estimé par un RNA seul, la courbe Q21b représente le débit évalué par le dispositif d'évaluation 10 et la courbe Q21c représente le débit réel. On constate que la courbe Q21b suit la courbe Q21a tant que le dispositif de correction n'est pas effectif (cf. figure 3B : jusqu'à t=t3, 60s, la sonde de niveau 23 ne renvoie aucune mesure). Ensuite, la courbe Q21b se rapproche sensiblement de la courbe Q21c. La loupe de droite de la figure 4B permet de constater un effet similaire pendant le deuxième dénoyage de la sonde de niveau 23, c'est-à-dire entre t6 (130s) et t8 (160s). L'utilisation du filtre de Kalman inodore améliore donc sensiblement les résultats que pourrait fournir un estimateur seul, notamment un estimateur de type RNA.

La figure 4C présente l'évolution du rapport de mélange en fonction du temps. Le rapport de mélange est défini comme le rapport des deux débits d'ergol. Chaque courbe MRz est obtenue en effectuant le rapport Q21z/Q20z, où z vaut a, b ou c. Le rapport de mélange est une grandeur souvent utilisée pour réguler le point de fonctionnement d'un système propulsif tel que le système propulsif 50.

L'évolution de la courbe MRb représentant le rapport de mélange calculé à partir des débits évalués par le dispositif d'évaluation 10 fait bien apparaître les recalages respectifs de chaque débit aux instants t1 et t3, puis t5 et t6. Le dispositif d'évaluation 10 fournit donc une estimation précise du rapport de mélange grâce aux recalages successifs permis par le filtre de Kalman inodore.

La figure 6 présente un autre mode de réalisation d'un dispositif d'évaluation 210 de débit d'ergol. Sur cette figure, les éléments correspondant ou identiques à ceux du premier mode de réalisation recevront le même signe de référence, au chiffre des centaines près, et ne seront pas décrits à nouveau.

Le dispositif d'évaluation 210 de la figure 6 est intégré au sein d'un circuit fluide 250 comprenant un réservoir 220 duquel s'écoule un fluide. En aval du réservoir, un débitmètre 215a mesure le débit du fluide. Toutefois, le débitmètre 215a peut être imprécis ou biaisé. Le rôle du dispositif 210 est de corriger la valeur de débit renvoyée par le débitmètre 215a sur la base de mesures de niveau du fluide dans le réservoir 220.

Le dispositif d'évaluation 210 fonctionne comme le dispositif d'évaluation 10, à ceci près qu'il utilise les mesures renvoyées par le débitmètre 215a au lieu de faire appel à un estimateur mathématique prédictif tel qu'un RNA. En d'autres termes, dans l'équation (3) ci-dessus, le terme $RNA_k(u_k)$ est remplacé par la valeur courante mesurée par le débitmètre 215a et acquise par le disposition d'acquisition 215. La valeur de débit obtenue par le dispositif d'obtention 216 est ensuite fournie au dispositif de correction 18 qui la corrige en fonction des mesures $y_k$ reçues de la carte d'acquisition 19. Comme représenté sur la figure 6, le débit évalué corrigé est renvoyé au débitmètre 215a par le dispositif d'évaluation 210, de manière à modifier l'étalonnement du débitmètre de façon à diminuer le biais des mesures.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé d'évaluation d'un débit d'un fluide provenant d'un réservoir (20, 21), comprenant la mesure d'un niveau du fluide ($y_k$) dans le réservoir et **caractérisé en ce qu'**il comprend une étape d'estimation du débit du fluide ($\hat{d}_k$) à l'aide d'un filtre de Kalman inodore, ladite étape d'estimation comprenant une étape d'obtention du débit brut de fluide ($\hat{q}_k$) ainsi que, lorsqu'une mesure de niveau ($y_k$) est disponible, une étape de correction au cours de laquelle le débit brut obtenu est corrigé en fonction de la mesure de niveau.

2. Procédé d'évaluation selon la revendication 1, dans lequel la valeur brute de débit ($\hat{q}_k$) est mesurée par au moins un capteur (215a), notamment un débitmètre.

3. Procédé d'évaluation selon la revendication 1, dans lequel la valeur brute de débit ($\hat{q}_k$) est calculée par une estimation mathématique à coefficients évalués itérativement, notamment par un réseau de neurones artificiels.

4. Procédé d'évaluation selon l'une quelconque des revendications 1 à 3, dans lequel la masse de fluide ($m_k$) dans le réservoir (20, 21) est une fonction non-linéaire du niveau de fluide ($n_k$) dans le réservoir.

5. Procédé d'évaluation selon l'une quelconque des revendications 1 à 4, dans lequel un état du filtre de Kalman inodore comprend un biais ($E_k$) de la valeur brute de débit ($\hat{q}_k$).

6. Procédé d'évaluation selon l'une quelconque des revendications 1 à 5, comprenant en outre, avant l'étape de correction, une étape de filtrage des fluctuations de la mesure de niveau ($y_k$).

7. Procédé d'évaluation de deux débits de fluides provenant respectivement d'un premier réservoir et d'un deuxième réservoir, dans lequel on évalue les débits des fluides en mettant en œuvre séparément :

   - un premier procédé d'évaluation comprenant une étape d'estimation des débits des fluides ($\hat{d}_k$) à l'aide d'un filtre de Kalman inodore, dans lequel aucune mesure de niveau n'est prise en compte dans une étape de correction du filtre de Kalman inodore;
   - un deuxième procédé selon l'une quelconque des revendications 1 à 6, dans lequel seule une mesure de niveau du premier réservoir est prise en compte ;

- un troisième procédé selon l'une quelconque des revendications 1 à 6, dans lequel seule une mesure de niveau du deuxième réservoir est prise en compte ;
- un quatrième procédé selon l'une quelconque des revendications 1 à 6, dans lequel les deux mesures de niveau sont prises en compte ;
et dans lequel on renvoie les débits évalués par celui des quatre procédés qui prend en compte exactement les mesures disponibles.

8. Système d'évaluation (10, 110, 210) d'un débit d'un fluide provenant d'un réservoir (20, 21, 220), comprenant des moyens de mesure (17, 22, 23) aptes à mesurer un niveau de fluide ($y_k$) dans le réservoir (20, 21, 220) et **caractérisé en ce qu'**il comprend des moyens d'estimation du débit du fluide ($\hat{d}_k$) à l'aide d'un filtre de Kalman inodore, lesdits moyens d'estimation comprenant des moyens d'obtention (16, 216) du débit brut de fluide ainsi que des moyens de correction (18) reliés aux moyens d'obtention et aux moyens de mesure et configurés pour corriger le débit brut obtenu ($\hat{q}_k$) par les moyens d'obtention (16, 216) en fonction du niveau mesuré ($y_k$) par les moyens de mesure.

9. Système propulsif (50), notamment pour lanceur spatial, comprenant deux réservoirs (20, 21) contenant chacun un ergol, une chambre de combustion (30) dans laquelle sont injectés les deux ergols, et un système d'évaluation (10) du débit d'au moins un des ergols selon la revendication 8.

10. Système de recalage d'un débitmètre (215a), comprenant un système d'évaluation (220) selon la revendication 8 pour évaluer le débit passant par le débitmètre.

11. Programme comportant des instructions pour l'exécution des étapes du procédé d'évaluation selon l'une quelconque des revendications 1 à 7 lorsque ledit programme est exécuté par un ordinateur (11).

12. Support d'enregistrement lisible par un ordinateur sur lequel est enregistré un programme d'ordinateur comprenant des instructions pour l'exécution des étapes du procédé d'évaluation selon l'une quelconque des revendications 1 à 7.


**Patentansprüche**

1. Verfahren zur Evaluierung eines Durchsatzes eines Fluids, das von einem Behälter (20, 21) kommt, umfassend die Messung eines Fluidpegels ($y_k$) in dem Behälter, **dadurch gekennzeichnet, dass** es einen Schritt der Schätzung des Fluiddurchsatzes ($\hat{d}_k$) mit Hilfe eines Unscented Kalman-Filters umfasst, wobei der Schritt der Schätzung einen Schritt des Erhaltens des Fluidrohdurchsatzes ($\hat{q}_k$) sowie, wenn eine Messung des Pegels ($y_k$) verfügbar ist, einen Schritt der Korrektur, in dem der erhaltene Rohdurchsatz als Funktion der Messung des Pegels korrigiert wird, umfasst.

2. Verfahren zur Evaluierung nach Anspruch 1, wobei der Rohdurchsatzwert ($\hat{q}_k$) durch mindestens einen Sensor (215a), insbesondere einen Durchflussmesser, gemessen wird.

3. Verfahren zur Evaluierung nach Anspruch 1, wobei der Rohdurchsatzwert ($\hat{q}_k$) durch eine mathematische Schätzung mit iterativ evaluierten Koeffizienten berechnet wird, insbesondere durch ein Netz künstlicher Neuronen.

4. Verfahren zur Evaluierung nach einem der Ansprüche 1 bis 3, wobei die Fluidmasse ($m_k$) in dem Behälter (20, 21) eine nicht lineare Funktion des Fluidpegels ($n_k$) in dem Behälter ist.

5. Verfahren zur Evaluierung nach einem der Ansprüche 1 bis 4, wobei ein Zustand des Unscented Kalman-Filters eine Verzerrung ($E_k$) des Rohdurchsatzwerts ($\hat{q}_k$) umfasst.

6. Verfahren zur Evaluierung nach einem der Ansprüche 1 bis 5, ferner umfassend, vor dem Schritt der Korrektur, einen Schritt der Filterung der Fluktuationen der Messung des Pegels ($y_k$).

7. Verfahren zur Evaluierung von zwei Durchsätzen von Fluids, die jeweils aus einem ersten Behälter und einem zweiten Behälter kommen, wobei die Durchsätze der Fluids evaluiert werden, indem getrennt durchgeführt werden:

   - ein erstes Verfahren zur Evaluierung, umfassend einen Schritt der Schätzung der Fluiddurchsätze ($\hat{d}_k$) mit Hilfe eines Unscented Kalman-Filters, wobei keine Messung des Pegels in einem Schritt der Korrektur des Unscented Kalman-Filters berücksichtigt wird,

- ein zweites Verfahren nach einem der Ansprüche 1 bis 6, wobei nur eine Messung des Pegels des ersten Behälters berücksichtigt wird,
- ein drittes Verfahren nach einem der Ansprüche 1 bis 6, wobei nur eine Messung des Pegels des zweiten Behälters berücksichtigt wird,
- ein viertes Verfahren nach einem der Ansprüche 1 bis 6, wobei die beiden Messungen des Pegels berücksichtigt werden,

und wobei die Durchsätze zurückgesendet werden, die durch jenes der vier Verfahren evaluiert werden, das genau die verfügbaren Messungen berücksichtigt.

8. System (10, 110, 210) zur Evaluierung eines Durchsatzes eines Fluids, das von einem Behälter (20, 21, 220) kommt, umfassend Mittel (17, 22, 23) zur Messung, die dafür geeignet sind, um einen Fluidpegel ($y_k$) in dem Behälter (20, 21, 220) zu messen, und **dadurch gekennzeichnet, dass** es Mittel zur Schätzung des Fluiddurchsatzes ($\hat{d}_k$) mit Hilfe eines Unscented Kalman-Filters, wobei die Mittel zur Schätzung Mittel (16, 216) zum Erhalten des Fluidrohdurchsatzes sowie Mittel (18) zur Korrektur umfassen, die mit den Mittel zum Erhalten und mit den Mitteln zur Messung verbunden sind und dazu ausgelegt sind, um den Rohdurchsatz ($\hat{q}_k$),der durch die Mittel (16, 216) zum Erhalten erhalten wird, als Funktion des Pegels ($y_k$), der von dem Mitteln zur Messung gemessen wird, zu korrigieren.

9. Antriebssystem (50), insbesondere für eine Trägerrakete, umfassend zwei Behälter (20, 21), die jeweils einen Treibstoff, eine Verbrennungskammer (30), in welche die beiden Treibstoffe eingespritzt werden, und ein System (10) zur Evaluierung des Durchsatzes mindestens eines der Treibstoffe nach Anspruch 8 enthalten.

10. System zur Neueinstellung eines Durchflussmessers (215a), umfassend ein System (220) zur Evaluierung nach Anspruch 8, um den durch den Durchflussmesser hindurchgehenden Durchsatz zu evaluieren.

11. Programm, umfassend Instruktionen zur Ausführung der Schritte des Verfahrens zur Evaluierung nach einem der Ansprüche 1 bis 7, wenn das Programm von einem Computer (11) ausgeführt wird.

12. Computerlesbarer Datenträger, auf dem ein Computerprogramm aufgezeichnet ist, das die Instruktionen zur Ausführung der Schritte des Verfahrens zur Evaluierung nach einem der Ansprüche 1 bis 7 umfasst.

**Claims**

1. An evaluation method for evaluating a flow rate of a fluid coming from a tank (20, 21), the method comprising measuring a level of the fluid ($y_k$) in the tank and being **characterized in that** it comprises an estimation step for estimating the flow rate of the fluid ($\hat{d}_k$) by using an unscented Kalman filter, said estimation step comprising an obtaining step for obtaining the raw fluid flow rate ($\hat{q}_k$) and, when a level measurement ($y_k$) is available, a correcting step during which the obtained raw flow rate is corrected as a function of the level measurement.

2. An evaluation method according to claim 1, wherein the raw flow rate value ($\hat{q}_k$) is measured by at least one sensor (215a), in particular a flowmeter.

3. An evaluation method according to claim 1, wherein the raw flow rate value ($\hat{q}_k$) is calculated by mathematical estimation with iteratively evaluated coefficients, in particular by using an artificial neural network.

4. An evaluation method according to any one of claims 1 to 3, wherein the mass of fluid ($m_k$) in the tank (20, 21) is a non-linear function of the level of fluid ($n_k$) in the tank.

5. An evaluation method according to any one of claims 1 to 4, wherein a state of the unscented Kalman filter includes a bias ($E_k$) of the raw flow rate value ($\hat{q}_k$).

6. An evaluation method according to any one of claims 1 to 5, further comprising, before the correction step, a filtering step of filtering fluctuations in the level measurement ($y_k$).

7. A method of evaluating two flow rates of fluids coming respectively from a first tank and from a second tank, wherein the flow rates of the fluids are evaluated by separately implementing:

• a first evaluation method comprising a step of estimating the flow rates of the fluids ($\hat{d}_k$) using an unscented

Kalman filter, in which no level measurement is taken into account in a step of correcting the unscented Kalman filter;
• a second method according to any one of claims 1 to 6, wherein only a level measurement of the first tank is taken into account;
• a third method according to any one of claims 1 to 6, wherein only a level measurement of the second tank is taken into account; and
• a fourth method according to any one of claims 1 to 6, wherein both level measurements are taken into account; and

returning the flow rates as evaluated by that one of the four methods that takes account exactly of the measurements that are available.

8. An evaluation system (10, 110, 210) for evaluating a flow rate of a fluid coming from a tank (20, 21, 220), the system comprising measurement means (17, 22, 23) suitable for measuring a fluid level ($y_k$) in the tank (20, 21, 220) and being **characterized in that** it includes estimation means for estimating the flow rate ($\hat{d}_k$) of the fluid using an unscented Kalman filter, said estimation means comprising obtaining means (16, 216) for obtaining the raw fluid flow rate and correction means (18) connected to the obtaining means and to the measurement means and configured to correct the raw flow rate ($\hat{q}_k$) as obtained by the obtaining means (16, 216) as a function of the level ($y_k$) measured by the measurement means.

9. A propulsion system (50), in particular for a space launcher, the system comprising two tanks (20, 21), each containing a propellant, a combustion chamber (30) into which the two propellants are injected, and an evaluation system (10) for evaluating the flow rate of at least one of the propellants according to claim 8.

10. A system for resetting a flowmeter (215a), the system comprising an evaluation system (220) according to claim 8 in order to evaluate the flow rate passing through the flowmeter.

11. A program including instructions for executing steps of the evaluation method according to any one of claims 1 to 7, when said program is executed by a computer (11).

12. A computer-readable data medium storing a computer program including instructions for executing steps of the evaluation method according to any one of claims 1 to 7.

FIG.1

FIG.2

FIG.3A

FIG.3B

FIG.4A

FIG.4B

FIG.4C

FIG.5

FIG.6

## RÉFÉRENCES CITÉES DANS LA DESCRIPTION

**Documents brevets cités dans la description**

- FR 2965305 A1

- FR 2996302 A1

**Littérature non-brevet citée dans la description**

- **JULIER ; UHLMANN.** *11th international symposium on Aerospace/Defence sensing, simulation and controls, Vol. multi sensor fusion, tracking and resource management II,* 1997